# EUROPEAN PATENT APPLICATION

(11) **EP 2 744 161 A1**
(43) Date of publication of application: **18.06.2014**
(21) Application number: 12196946.3
(22) Date of filing: 13.12.2012
(51) Int. Cl.: H04L 25/06, H04L 27/38

(54) **Wireless electronic device with a decoder and associated methods**

(71) Applicant: BlackBerry Limited, Waterloo, ON N2K 0A7 (CA)
(72) Inventor: Stafford, Christopher John, Harston, Cambridge CB22 7GG (GB)
(74) Representative: Noble, Nicholas

(57) **Abstract**

A method for operating a decoder includes receiving a complex signal representative of a received symbol from among a plurality of symbols. The received symbol includes a plurality of bits and corresponds to a respective point on a constellation map. Likelihood metrics are generated for the received symbol, with each likelihood metric reflecting a likelihood of the received symbol corresponding to one of the points on the constellation map. The likelihood metrics are arranged in columns and rows. Common likelihood metrics are determined for each column and for each row. The method further includes determining which bits in the received symbol are to be compared by columns for selecting best likelihood metrics, and which bits in the received symbol are to be compared by rows for selecting best likelihood metrics. The common likelihood metrics are compared to determine a best likelihood metric for the bits in the received symbol that are to be compared by columns, and to be compared by rows.

## Description

### Technical Field

The present disclosure relates to the field of wireless communications, and more particularly, to a method and device for comparing metrics used in a maximum likelihood decoding process.

### Background

In a digital communications system, each symbol constituting a message goes through a modulation process before being transmitted. Modulation converts a digital signal into a form which can be transmitted in a channel. The modulation is performed by loading the digital signal onto one or more carriers. This provides a certain variation to the carrier according to a digital value of the digital signal, and enables a receiver to restore the original digital signal from the modulated signal based on the information of the modulation scheme.

Examples of digital modulation schemes include binary phase shift keying (BPSK), quadrature PSK (QPSK) and quadrature amplitude modulation (QAM). BPSK gives variation to a phase of a carrier by utilizing a binary symbol represented as a 0 or a 1. QPSK transmits four levels of data by altering a phase of the carrier into 4 different values having a 90 degree interval. QAM is based on changing both an amplitude and a phase. For example, QAM may produce signals of which amplitudes are identical but phases are different, signals of which phases are identical but amplitudes are different, and signals of which both phases and amplitudes are different. Representative examples of QAM are 16QAM, 64QAM and 256QAM, and may represent 16, 64 and 256 different data values, respectively.

With respect to the above described modulation schemes, a receiver restores an original message through processes of demodulation and detection. The demodulation is a restoration of a signal, while the detection is a process of detecting a digital value of the signal. In the case of BPSK, detection of a message is relatively easy, for it only requires a decision between two possible values.

However, in the case of QPSK or QAM, the decision process is more complex due to the increased number of possible transmit values. Common detection techniques, rather than making an instantaneous decision as to whether a bit is a 0 or a 1, generate a value representing the likelihood of a 0 or a 1. This determination is called a soft decision. In this instance, a detector output is called a soft bit. More particularly, the soft decision is performed by calculating a likelihood metric for each bit. The likelihood metric is a value indicating a likelihood that a particular signal may have been transmitted with respect to a received signal.

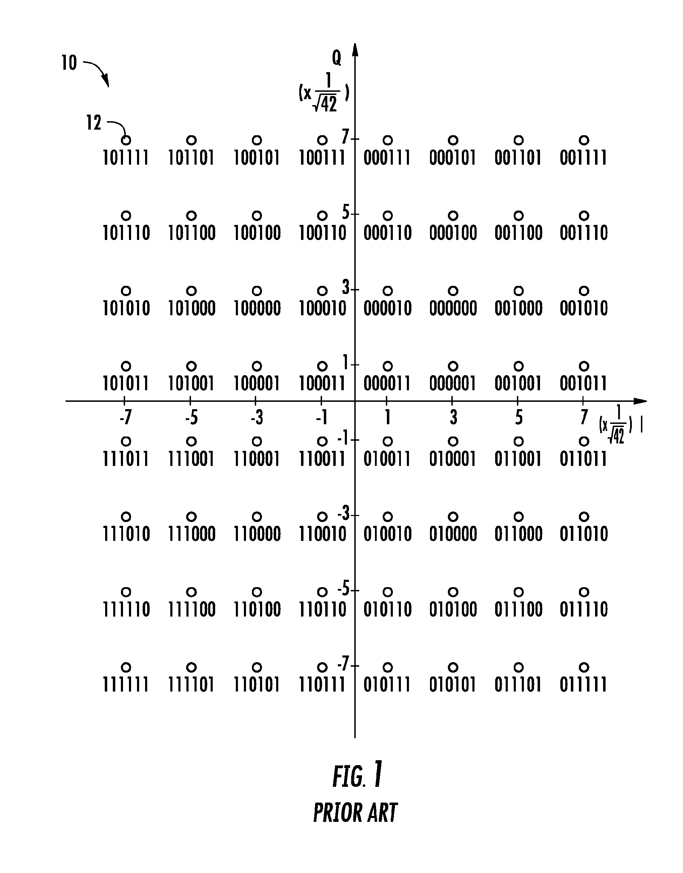

A QAM64 constellation map **10** is provided in FIG. 1, where each complex constellation point on the transmit side is encoded on 6 bits, i.e., a hextuplet. For example, complex constellation point **12** encoded using bits 101111. Part of the maximum likelihood decoding process requires the generation of minimum metric values for all points of the transmitted constellation point as well as the selection of the "best" metric. For higher order QAM modulation schemes a large number of comparison operations have to be performed on each transmitted symbol to find the best metric.

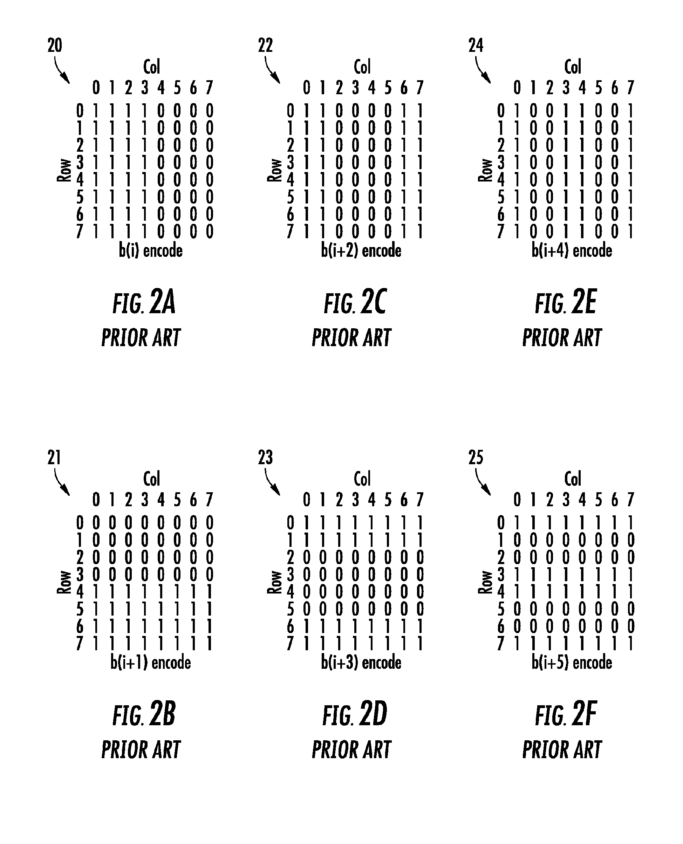

Each complex constellation point on the constellation map is represented by a symbol, where each symbol is defined by 6 bits {b(i),b(i+1),b(i+2)... b(i+5)}. One common decoding technique requires the selection (and combination) of two metrics for each encoded data bit in the symbol. One metric is selected from the set where the encoded bit is a 1, and the other metric is selected from the set where the bit is a 0. The selection process is performed for each bit. Diagrams **20-25** show the corresponding encoding of each bit individually is provided in FIGS. 2a-2f.

For example, in order to decode bit b(i), which corresponds to diagram **20** in FIG. 2a, the best likelihood metric is selected from the 32 values in columns 0...3 representing the probability (i.e., likelihood) that b(i) was transmitted as a 1, and the best likelihood metric is also selected from columns 4...7 representing the probability (i.e., likelihood) that b(i) was transmitted as a 0. As far as bit b(i) is concerned, a tree comparison may be performed on each group of 32 metrics in any order requiring 16 + 8 + 4 + 2 + 1 = 31 comparison operations to determine the best likelihood metric.

To determine the best likelihood metric for each bit being a 1 and being a 0, 62 comparison operations are performed per bit. Since there are 6 bits per symbol, the total number of comparison operations is 6 x 62 = 372 for each symbol, i.e., hextuplet. This comparison process is computational intensive, which negatively effects processing times as well as power consumption.

### Brief Description of the Drawings

FIG. 1 is a 64QAM constellation map in accordance with the prior art, where each point on the constellation map corresponds to an encoded symbol to be transmitted.

FIGS. 2a-2f are diagrams separating the encoding scheme of FIG. 1 into individual bits.

FIG. 3 is a block diagram of a wireless communications system in accordance with one exemplary aspect.

FIG. 4 is a flowchart illustrating a method for operating the decoder illustrated in FIG. 3.

FIG. 5 is a front view of a mobile wireless communications device in accordance with another exemplary aspect.

FIG. 6 is a schematic block diagram illustrating additional components that may be included in the mobile wireless communications device illustrated in FIG. 5.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

In accordance with one exemplary aspect, a method for operating a decoder includes receiving a complex signal representative of a received symbol from among a plurality of symbols, with the received symbol comprising a plurality of bits and corresponding to a respective point on a constellation map. A plurality of likelihood metrics may be generated for the received symbol, with each likelihood metric reflecting a likelihood of the received symbol corresponding to one of the points on the constellation map. The plurality of likelihood metrics may be arranged in columns and rows.

The method may further comprise determining common likelihood metrics for each column and for each row. A determination may be made as to which bits in the received symbol are to be compared by columns for selecting best likelihood metrics, and which bits in the received symbol are to be compared by rows for selecting best likelihood metrics.

The common likelihood metrics may be compared to determine a best likelihood metric for the bits in the received symbol that are to be compared by columns, and to determine a best likelihood metric for the bits in the received symbol that are to be compared by rows. The common likelihood metrics advantageously reduce the number of comparisons performed by the decoder when determining the best likelihood metrics for the bits within the received symbol. Since the comparison process is computational intensive, sharing common results prevents the decoder from having to repeat the same comparisons associated with the different bits making up the received symbol. For a battery powered receiver, this helps to prolong the life of the battery.

Determining which bits in the received symbol are to be compared by columns and by rows may be based on half of the bits being compared by columns and with the other half of the bits being compared by rows. The columns and rows of the bits may match up with the columns and rows of the plurality of likelihood metrics.

For each bit being compared by columns, half of the columns may correspond to the bit being a 1 and where the other half of the columns may correspond to the bit being a 0. Similarly, for each bit being compared by rows, half of the rows may correspond to the bit being a 1 and where the other half of the rows may correspond to the bit being a 0.

Comparing the common likelihood metrics comprises for each bit to be compared by columns may comprise comparing the common likelihood metrics for the columns corresponding to the bit being a 1 to determine a best likelihood metric, and comparing the common likelihood metrics for the columns corresponding to the bit being a 0 to determine a best likelihood metric.

Comparing the common likelihood metrics comprises for each bit to be compared by rows may comprise comparing the common likelihood metrics for the rows corresponding to the bit being a 1 to determine a best likelihood metric, and comparing the common likelihood metrics for the rows corresponding to the bit being a 0 to determine a best likelihood metric.

In accordance with another exemplary aspect, a receiver comprises a decoder configured to perform the above described steps.

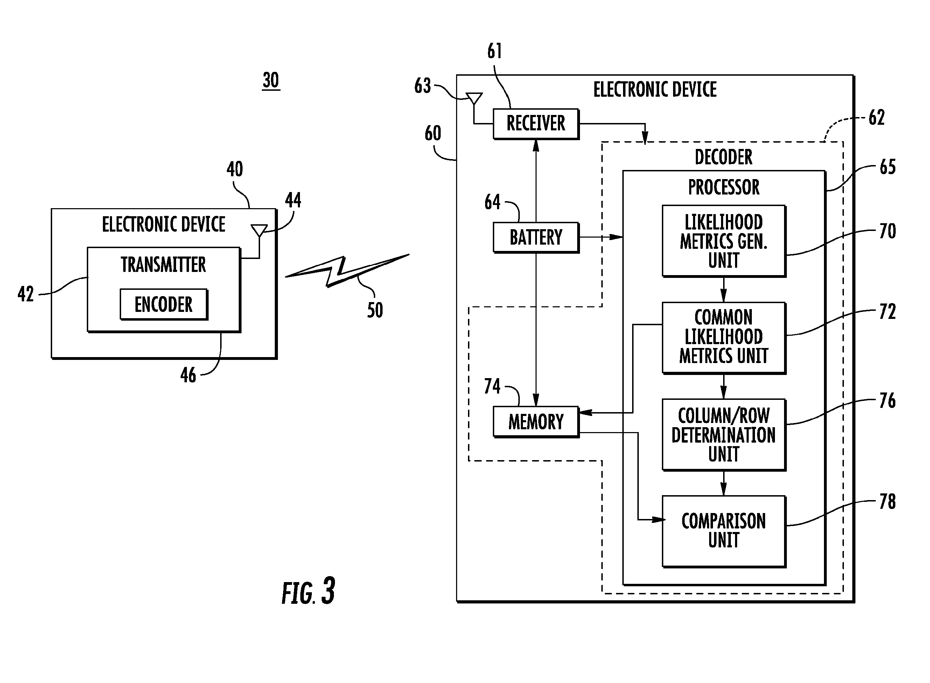

Referring now to FIG. 3, a wireless communications system **30** includes a first electronic device **40** communicating with a second electronic device **60.** The first electronic device **40** includes a transmitter **42** coupled to an antenna **44.** The transmitter **40** includes an encoder **46** configured to encode a complex signal based on a symbol from a plurality of symbols, with each symbol comprising a plurality of bits and corresponding to a respective point on the signal constellation map **10** as illustrated in FIG. 1.

For discussion purposes, the encoding is based on a 64QAM. Other encoding schemes may be used, such as BPSK and QPSK, and other example QAMs include 16QAM and 256QAM, as readily appreciated by those skilled in the art.

The encoded complex signal is transmitted over a communications channel **50** to the second electronic device **60.** The received encoded complex signal is typically corrupted by noise within the communications channel **50.** The second electronic device **60** includes a receiver **61** coupled to an antenna **63.** A decoder **62** is coupled the receiver **61** for decoding the received complex signal, and includes a processor **65** and a memory **74** coupled thereto. A battery **64** is coupled to the decoder **62** and to the receiver **61.**

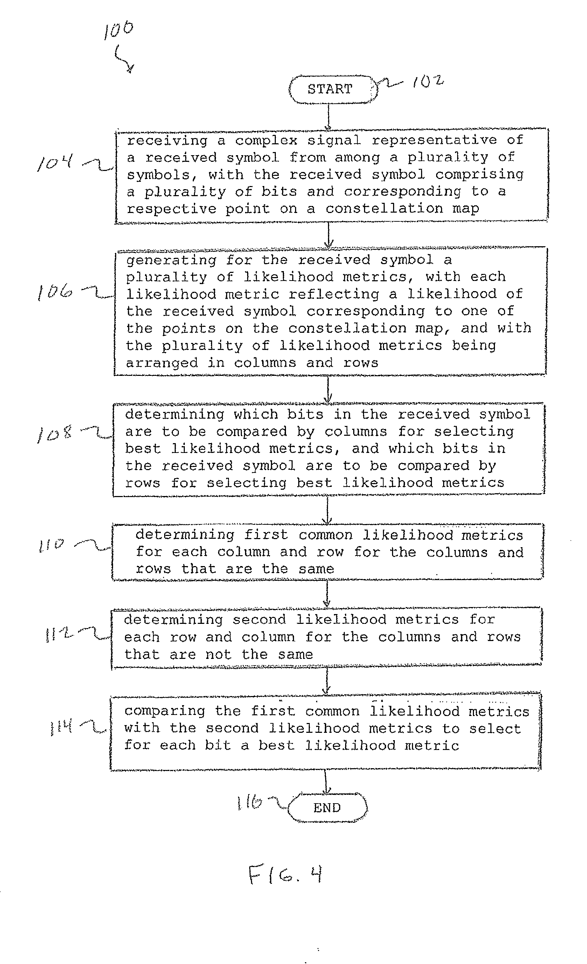

When discussing the decoder **62,** reference will also be made to the flowchart **100** in FIG. 4 illustrating a method for operating the decoder. From the start (Block **102),** the decoder **62** receives from the transmitter **40** at Block **104** a complex signal representative of a received symbol from among a plurality of symbols, with the received symbol comprising a plurality of bits and corresponding to a respective point on a constellation map.

The processor **65** within the decoder **62** includes a likelihood metrics generation unit **70** for generating likelihood metrics at Block **106** for each received symbol, with each likelihood metric reflecting a likelihood of the received symbol corresponding to one of the points on the constellation map **10.** The likelihood metrics are arranged in columns and rows.

The processor **65** further includes a common likelihood metrics unit **72,** a column/row determination unit **76,** and a comparison unit **78.** The common likelihood metrics unit **72** is configured to determine at Block **108** common likelihood metrics for each column and for each row. A column/row determination unit **76** is configured to determine at Block **110** which bits in the received symbol are to be compared by columns for selecting best likelihood metrics, and which bits in the received symbol are to be compared by rows for selecting best likelihood metrics.

A comparison unit **78** is configured to compare the common likelihood metrics to determine a best likelihood metric for the bits in the received symbol that are to be compared by columns at Block **112,** and compare the common likelihood metrics to determine a best likelihood metric for the bits in the received symbol that are to be compared by rows at Block **114.** The method ends at Block **116.**

The decoder **62** is advantageously configured to reduce the number of comparison operations by finding commonality in the decoding process. By taking advantage of this commonality, processing times may be improved and power consumption may be reduced.

As discussed in the background, in the case of QAM, it is not easy to detect messages because a large number of data symbols are densely allocated in a limited frequency band. It is not clearly determined whether received data corresponds to a 0 or a 1. Instead, a likelihood that an originally transmitted bit value of a received signal is a 0 or a 1 is determined.

This determination is referred to as a soft decision, as readily understood by those skilled in the art. After a number of soft decisions have been collected by the decoder **62** for a plurality of symbols, then hard decisions can be made for the plurality of symbols. Discussion of the present decoder **62** is limited to how the soft decisions are made, and more particularly, to how a best likelihood metric for each bit being a 1 and how a best likelihood metric for each bit being a 0 are selected for each symbol.

Operation of the decoder **62** will now be discussed in greater detail. As noted above, the decoder **62** includes a likelihood metrics generation unit **70** for generating likelihood metrics for each received symbol. Generation of the likelihood metrics, for example, may be characterized by calculating a complex distance between each symbol and a received signal in the signal constellation map **100** of FIG. 1. The likelihood metrics are regenerated for each received symbol, and are arranged in columns and rows. The likelihood metrics are the same for each bit within the received symbol.

Since the likelihood metrics are the same for each bit within the received symbol, the common likelihood metrics unit **72** determines common likelihood metrics for each column and for each row. For each column, 7 comparisons are made to determine a common likelihood metric. Similarly, for each row, 7 comparisons are made to determine a common likelihood metric. Since there are 8 columns in the illustrated example, 56 column comparison are made and 56 row comparisons are made. Once the common likelihood metrics have been determined for each column and for each row, these computation steps do not have to be repeated. The common likelihood metrics may be stored in a memory **74** or within the processor **65** so that the comparison results may be retrieved when needed.

The column/row determination unit **76** determines which bits in the received symbol are to be compared by columns for selecting best likelihood metrics, and which bits in the received symbol are to be compared by rows for selecting best likelihood metrics. For the 6 bits that make up each received symbol, bits b(i), b(i+2) and b(i+4) are compared by columns, and bits b(i+1), b(i+3) and b(i+5) are compared by rows, as illustrated in FIGS. 2a-2f.

In particular, bit b(i) corresponds to diagram **20** in FIG. 2a, bit b(i+1) corresponds to diagram **21** in FIG. 2b, bit b(i+2) corresponds to diagram **22** in FIG. 2c, bit b(i+3) corresponds to diagram **23** in FIG. 2d, bit b(i+4) corresponds to diagram **24** in FIG. 2e, and bit b(i+5) corresponds to diagram **25** in FIG. 2f.

For bits b(i), b(i+2) and b(i+4) being compared by columns, half of the columns correspond to the bit being a 1 and with the other half of the columns correspond to the bit being a 0. In bit b(i), for example, columns 0-3 correspond to the bit being a 1 and columns 4-7 correspond to the bit being 0.

For bits b(i+1), b(i+3) and b(i+5) being compared by rows, half of the rows correspond to the bit being a 1 and with the other half of the rows correspond to the bit being a 0. In bit b(i+1), for example, rows 0-3 correspond to the bit being a 0 and columns 4-7 correspond to the bit being 1.

To determine the best likelihood metric for bit b(i) being a 1, the comparison unit **78** retrieves the common likelihood metrics for columns 0-3. Three computation comparisons are made to determine the best likelihood metric being a 1 for bit b(i). Similarly, to determine the best likelihood metric for bit b(i) being a 0, the comparison unit **78** retrieves the common likelihood metrics for columns 4-7. Three computation comparisons are made to determine the best likelihood metric being a 0 for bit b(i). This process is repeated for bit b(i+2) and bit b(i+4). So far, 74 (56+18) computations comparisons have been made with respect to the column comparisons.

To determine the best likelihood metric for bit b(i+1) being a 0, the comparison unit **78** retrieves the common likelihood metrics for rows 0-3. Three computation comparisons are made to determine the best likelihood metric being a 0 for bit b(i+1). Similarly, to determine the best likelihood metric for bit b(i+1) being a 1, the comparison unit **78** retrieves the common likelihood metrics for rows 4-7. Three computation comparisons are made to determine the best likelihood metric being a 1 for bit b(i). This process is repeated for bit b(i+2) and bit b(i+4). So far, 74 (56+18) computations comparisons have been made with respect to the row comparisons.

Based on the above intermediate determinations by the common likelihood metrics unit **76,** computational savings can be made by structuring a comparator tree such that the comparison unit **78** makes use of the common likelihood metrics. Without taking advantage of the common likelihood metrics, the comparison unit **78** would recalculate the likelihood metrics for each column and for each row for each of the 6 bits. This results in 372 (6 x 62) computational comparisons to be made for each symbol. In contrast, 148 computational comparisons are made when taking into account the savings that can be gained when calculating in advance the common likelihood metrics.

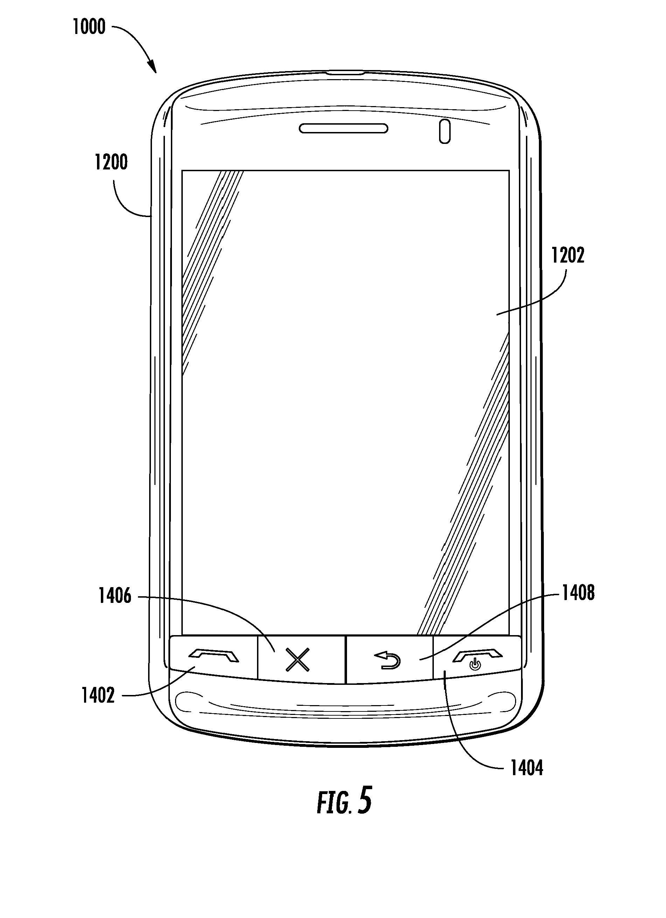

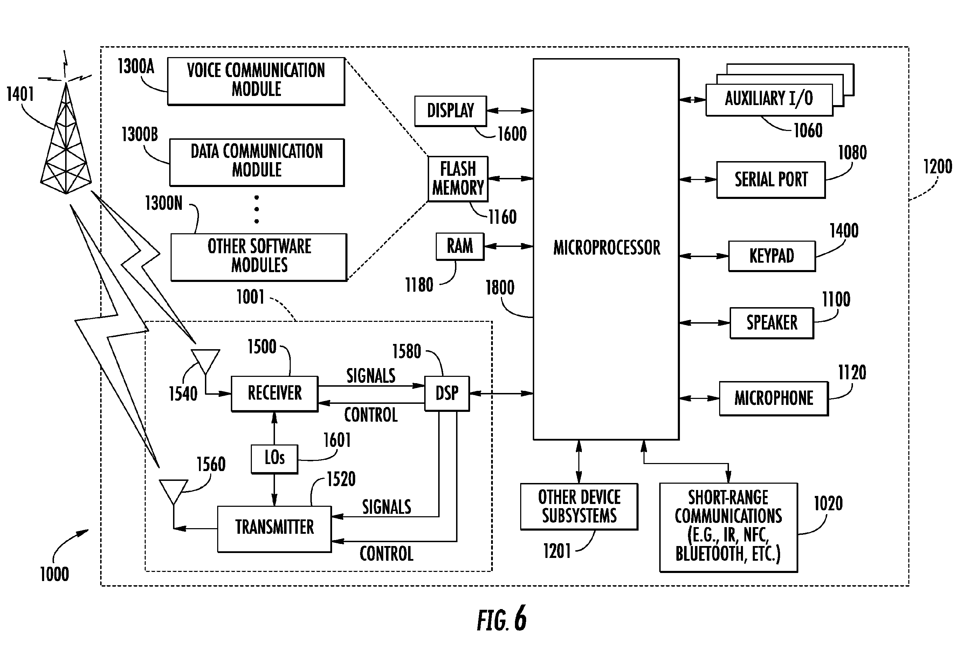

Exemplary components that may be used in various embodiments of the above-described mobile wireless communications device are now described with reference to an exemplary mobile wireless communications device **1000** shown in FIGS. 5 and 6.

The mobile wireless communications device **1000** illustratively includes a portable housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. The keypad **1400** includes a plurality of control keys including an "off hook" (i.e., initiate phone call) key **1402,** an "on hook" (i.e., discontinue phone call) key **1404,** a menu key **1406,** and a return or escape key **1408.**

A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications or units **1300A-1300N** on the device **1000,** such as software units for performing various steps or operations. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing unit, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity unit, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications unit to provide for communication with similarly-enabled systems and devices.

Many modifications and other embodiments of the disclosure will come to the mind of one skilled in the art having the benefit of the teachings presented in the foregoing descriptions and the associated drawings. Therefore, it is understood that the disclosure is not to be limited to the specific embodiments disclosed, and that modifications and embodiments are intended to be included as readily appreciated by those skilled in the art.

## Claims

1. A method for operating a decoder (62) comprising:
receiving (104) a complex signal representative of a received symbol (12) from among a plurality of symbols, with the received symbol (12) comprising a plurality of bits and corresponding to a respective point on a constellation map (10);
generating (106) for the received symbol (12) a plurality of likelihood metrics, with each likelihood metric reflecting a likelihood of the received symbol (12) corresponding to one of the points on the constellation map (10), and with the plurality of likelihood metrics being arranged in columns and rows;
determining (108) common likelihood metrics for each column and for each row;
determining (110) which bits in the received symbol (12) are to be compared by columns for selecting best likelihood metrics, and which bits in the received symbol (12) are to be compared by rows for selecting best likelihood metrics;
comparing (112) the common likelihood metrics to determine a best likelihood metric for the bits in the received symbol (12) that are to be compared by columns; and
comparing (114) the common likelihood metrics to determine a best likelihood metric for the bits in the received symbol (12) that are to be compared by rows.

2. The method according to Claim 1 wherein determining which bits in the received symbol (12) are to be compared by columns and by rows is based on half of the bits being compared by columns and with the other half of the bits being compared by rows, with the columns and rows matching up with the columns and rows of the plurality of likelihood metrics.

3. The method according to Claim 2 wherein for each bit being compared by columns, half of the columns correspond to the bit being a 1 and with the other half of the columns corresponding to the bit being a 0; and wherein for each bit being compared by rows, half of the rows correspond to the bit being a 1 and with the other half of the rows corresponding to the bit being a 0.

4. The method according to Claim 3 wherein comparing the common likelihood metrics comprises for each bit to be compared comprises:
comparing the common likelihood metrics for the columns corresponding to the bit being a 1 to determine a best likelihood metric;
comparing the common likelihood metrics for the columns corresponding to the bit being a 0 to determine a best likelihood metric;
comparing the common likelihood metrics for
the rows corresponding to the bit being a 1 to determine a best likelihood metric; and
comparing the common likelihood metrics for the rows corresponding to the bit being a 0 to determine a best likelihood metric.

5. The method according to Claim 1 further comprising storing the common likelihood metrics.

6. An electronic device (60) comprising:
a decoder (62) configured to receive a complex signal representative of a received symbol (12) from among a plurality of symbols, with the received symbol (12) comprising a plurality of bits and corresponding to a respective point on a constellation map (10), said decoder (62) comprising
a likelihood metrics generation unit (70) configured to generate for the received symbol (12) a plurality of likelihood metrics, with each likelihood metric reflecting a likelihood of the received symbol (12) corresponding to one of the points on the constellation map (10), and with the plurality of likelihood metrics being arranged in columns and rows,
a common likelihood metrics unit (72) configured to determine common likelihood metrics for each column and for each row, and
a column/row determination unit (76) configured to determine which bits in the received symbol (12) are to be compared by columns for selecting best likelihood metrics, and which bits in the received symbol (12) are to be compared by rows for selecting best likelihood metrics,
a comparison unit (78) configured to
compare the common likelihood metrics to determine a best likelihood metric for the bits in the received symbol (12) that are to be compared by columns, and
compare the common likelihood metrics to determine a best likelihood metric for the bits in the received symbol (12) that are to be compared by rows.

7. The electronic device (62) according to Claim 6 wherein said column/row determination unit (76) is configured to determine which bits in the received symbol (12) are to be compared by columns and by rows is based on half of the bits being compared by columns and with the other half of the bits being compared by rows, with the columns and rows matching up with the columns and rows of the plurality of likelihood metrics.

8. The electronic device (62) according to Claim 7 wherein for each bit being compared by columns, half of the columns correspond to the bit being a 1 and with the other half of the columns corresponding to the bit being a 0; and wherein for each bit being compared by rows, half of the rows correspond to the bit being a 1 and with the other half of the rows corresponding to the bit being a 0.

9. The electronic device (62) according to Claim 8 wherein said comparison unit (78) is configured to perform the following:
compare the common likelihood metrics for the columns corresponding to the bit being a 1 to determine a best likelihood metric; and
compare the common likelihood metrics for the columns corresponding to the bit being a 0 to determine a best likelihood metric.

10. The electronic device (62) according to Claim 9 wherein said comparison unit (78) is configured to perform the following:
compare the common likelihood metrics for the rows corresponding to the bit being a 1 to determine a best likelihood metric; and
compare the common likelihood metrics for the rows corresponding to the bit being a 0 to determine a best likelihood metric.
